# FASCICULE DE BREVET EUROPEEN

(11) **EP 3 866 064 B1**
(45) Date de publication et mention de la délivrance du brevet: **10.12.2025**
(21) Numéro de dépôt: 21156234.3
(22) Date de dépôt: 10.02.2021
(51) Int. Cl.: G06V 10/25, G06V 40/16, G06V 40/18, G06V 40/70

(54) **PROCEDE D'AUTHENTIFICATION OU D'IDENTIFICATION D'UN INDIVIDU**
VERFAHREN ZUR AUTHENTIFIZIERUNG ODER IDENTIFIZIERUNG EINER PERSON
METHOD FOR AUTHENTICATION OR IDENTIFICATION OF AN INDIVIDUAL

(30) Priorité: 14.02.2020 FR 2001466
(43) Date de publication de la demande: 18.08.2021
(73) Titulaire: IDEMIA Public Security France, 92400 Courbevoie (FR)
(72) Inventeur: BEZOT, Grégoire, 92400 COURBEVOIE (FR); SIWEK, Jean-François, 92400 COURBEVOIE (FR); PESCHAUX, Marine, 92400 COURBEVOIE (FR)
(74) Mandataire: IPS

(56) Documents cités:
- US-A1- 2017 085 790
- US-A1- 2019 251 403
- US-A1- 2019 332 901
- US-A1- 2019 342 286

## Description

### DOMAINE TECHNIQUE GENERAL

La présente invention concerne le domaine de l'authentification et l'identification biométrique, en particulier par reconnaissance de visage ou d'iris.

### ETAT DE L'ART

On connait des terminaux de contrôle d'accès biométrique, en particulier basés sur de la reconnaissance optique : un utilisateur autorisé place un trait biométrique (son visage, son iris, etc.), devant le terminal, ce dernier est reconnu, et un portail par exemple est déverrouillé.

Généralement, ce type de terminal est équipé d'un ou plusieurs capteurs de type caméra 2D ou 3D, à « large champ de vue » ce qui permet au produit d'avoir une bonne ergonomie (l'utilisateur n'a pas besoin de se positionner précisément à un endroit défini), et des sources lumineuses tels que des LED, émettant de la lumière visible ou infrarouge (IR), et/ou des diodes laser. En effet, les caméras ne peuvent fonctionner correctement que si l'éclairage du sujet est correct.

Une première difficulté, avant même la mise en œuvre du traitement biométrique, est la détection du « bon sujet », c'est-à-dire le visage de l'utilisateur qui requiert effectivement l'accès (il est courant que plusieurs personnes soient présentes dans le champ des caméras), et son exposition correcte.

Le problème est que ces deux tâches sont généralement inextricablement liées : il est connu de « régler » la caméra et les sources lumineuses pour adapter l'exposition par rapport à une région d'intérêt détectée du champ de vision (plus précisément, l'exposition de toute l'image est modifiée en fonction de la luminosité observée de cette région, en d'autres termes la luminosité de la région est « normalisée », éventuellement au détriment d'autres régions de l'image qui pourront le cas échéant devenir sur- ou sous-exposées), mais on a déjà besoin d'une bonne exposition pour mettre en œuvre une bonne détection de ladite région d'intérêt. Or on constate que la variété d'installations, d'environnement lumineux, de distances d'utilisation, complexifient encore ces tâches.

Il est possible tout simplement de réutiliser les réglages caméra précédents, mais souvent d'un moment à l'autre de la journée les conditions lumineuses ont complètement changé.

On peut sinon réutiliser une région d'intérêt considérée précédemment et ajuster automatiquement l'exposition par rapport à cette région d'intérêt mais à nouveau l'individu peut avoir une position très différente et l'image précédente peut avoir été mal exposée, tout particulièrement dans la mesure où le champ de vue est très large, bien plus grand que la région d'intérêt (visage).

Il a par conséquent été proposé l'utilisation de techniques d'imagerie à grande gamme dynamique (« high-dynamic-range », HDR) permettant de mémoriser de nombreux niveaux d'intensité lumineuse dans une image (plusieurs valeurs d'expositions différentes), et ainsi de tester toute la dynamique d'éclairement possible. Néanmoins, manipuler de telles images HDR est lourd et plus lent, de sorte que l'expérience utilisateur est diminuée.

Alternativement, il a été proposé de choisir un visage « le plus près » parmi plusieurs comme région d'intérêt potentielle en fonction de la taille en pixels et ensuite d'ajuster l'exposition par rapport à ce visage. Cette technique apporte satisfaction, mais il a été constaté qu'on pouvait alors tromper le terminal en plaçant en arrière-plan une affiche ou un poster représentant un visage de grande dimension, qui sera alors considéré comme région d'intérêt au détriment des vrais visages d'individus devant le terminal (ces derniers apparaissant « plus loin »). De surcroit si l'exposition est ajustée pour optimiser un visage très lointain, alors on ne verra même pas un visage qui arriverait ensuite beaucoup plus proche de la caméra, parce qu'il serait alors saturé. On ne peut alors pas optimiser la dynamique sur ce nouveau visage. Document US 2017/085790 A1 décrit un système d'identification de zones d'intérêts. Document US 2019/251403 A1 décrit un système de reconnaissance d'objets.

Il serait par conséquent souhaitable de disposer d'une nouvelle solution simple, fiable et efficace d'amélioration des performances des algorithmes d'authentification et d'identification biométrique.

### PRESENTATION DE L'INVENTION

L'invention est telle qu'exposée dans les revendications indépendantes.

Selon un premier aspect, la présente invention concerne un procédé d'authentification ou d'identification d'un individu, caractérisé en ce qu'il comprend la mise en œuvre par des moyens de traitement de données d'un terminal des étapes suivantes :
(a) Obtention d'une image de radiation et d'une carte de profondeur sur chacune desquelles apparait un trait biométrique dudit individu ;
(b) Identification dans ladite carte de profondeur d'une première région d'intérêt susceptible de contenir ledit trait biométrique ;
(c) Sélection dans ladite image de radiation d'une deuxième région d'intérêt correspondant à ladite première région d'intérêt identifiée dans la carte de profondeur ;
(d) Détection dudit trait biométrique de l'individu dans ladite deuxième région d'intérêt sélectionnée de ladite image de radiation ;
(e) Authentification ou identification dudit individu sur la base du trait biométrique détecté

Selon d'autres caractéristiques avantageuses et non limitatives :
L'étape (a) comprend l'acquisition de ladite image de radiation à partir de données acquises par des premiers moyens d'acquisition optique du terminal et/ou l'acquisition de ladite carte de profondeur à partir de données acquises par des deuxièmes moyens d'acquisition optique du terminal.

Ladite première région d'intérêt est identifiée à l'étape (b) comme l'ensemble des pixels de ladite carte de profondeur associés à une valeur de profondeur comprise dans une gamme prédéterminée.

Ladite l'étape (c) comprend en outre la suppression dans ladite image de radiation des objets immobiles.

Ladite l'étape (d) comprend en outre l'adaptation de l'exposition de l'image de radiation par rapport à la deuxième région d'intérêt sélectionnée.

L'image de radiation et la carte de profondeur présentent sensiblement le même point de vue.

Ledit trait biométrique de l'individu est choisi parmi un visage et un iris de l'individu.

L'étape (e) comprend la comparaison du trait biométrique détecté avec des données biométriques de référence stockées sur des moyens de stockage de données.

L'étape (e) comprend la mise en œuvre d'un contrôle d'accès en fonction du résultat de ladite identification ou authentification biométrique.

L'image de radiation est une image visible ou une image infrarouge.

Selon un deuxième aspect, la présente invention concerne un terminal comprenant des moyens de traitement de données configurés pour implémenter :
- l'obtention d'une image de radiation et d'une carte de profondeur sur chacune desquelles apparait un trait biométrique dudit individu ;
- l'identification dans ladite carte de profondeur d'une première région d'intérêt susceptible de contenir ledit trait biométrique ;
- la sélection dans ladite image de radiation d'une deuxième région d'intérêt correspondant à ladite première région d'intérêt identifiée dans la carte de profondeur ;
- la détection dudit trait biométrique de l'individu dans ladite deuxième région d'intérêt sélectionnée de ladite image de radiation ;
- l'authentification ou l'identification dudit individu sur la base du trait biométrique détecté.

Selon d'autres caractéristiques avantageuses et non limitatives, le terminal comprend des premiers moyens d'acquisition optique 13a pour l'acquisition de ladite image de radiation et/ou des deuxièmes moyens d'acquisition optique 13b pour l'acquisition de ladite carte de profondeur.

Selon un troisième et un quatrième aspect, l'invention propose un produit programme d'ordinateur comprenant des instructions de code pour l'exécution d'un procédé selon le premier aspect d'authentification ou d'identification d'un individu ; et un moyen de stockage lisible par un équipement informatique sur lequel un produit programme d'ordinateur comprend des instructions de code pour l'exécution d'un procédé selon le premier aspect d'authentification ou d'identification d'un individu.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 représente de façon générale un terminal pour la mise en œuvre du procédé d'authentification ou d'identification d'un individu selon l'invention ;
- la figure 2 représente schématiquement les étapes d'un mode de réalisation du procédé d'authentification ou d'identification d'un individu selon l'invention ;
- la figure 3a représente un exemple d'image de radiation utilisée dans le procédé selon l'invention ;
- la figure 3b représente un exemple de carte de profondeur utilisée dans le procédé selon l'invention ;
- la figure 3c représente un exemple de première région d'intérêt utilisée dans le procédé selon l'invention ;
- la figure 3d représente un exemple de deuxième région d'intérêt utilisée dans le procédé selon l'invention.

### DESCRIPTION DETAILLEE

### Architecture

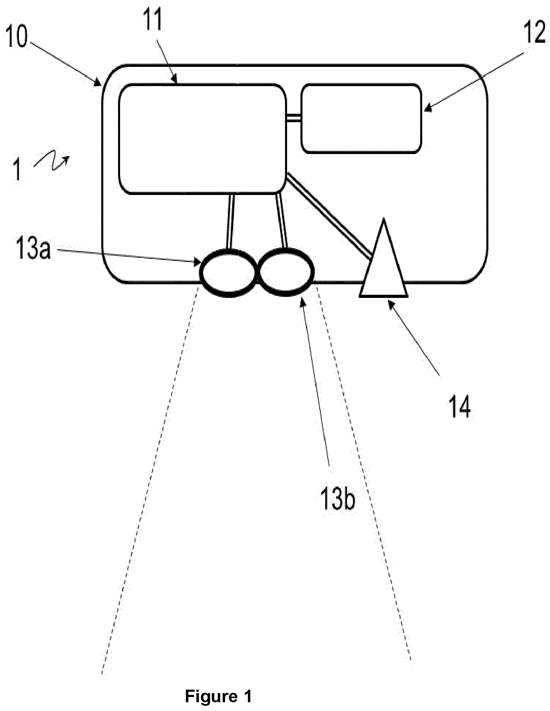

En référence à la Figure 1, est proposé un terminal 1 pour la mise en œuvre d'un procédé d'authentification ou d'identification d'un individu, c'est-à-dire déterminer ou vérifier l'identité de l'individu se présentant devant le terminal 1, pour le cas échéant autoriser l'accès à cet individu. Comme on le verra, il s'agit typiquement de biométrie du visage (reconnaissance faciale ou d'iris), dans laquelle l'utilisateur doit approcher son visage, mais également de biométrie d'empreinte (digitale ou palmaire) à distance dans laquelle l'utilisateur approche sa main.

Le terminal 1 est typiquement un équipement détenu et contrôlé par une entité auprès de qui l'authentification/identification doit être effectuée, par exemple une entité gouvernementale, douanière, une entreprise, etc. On comprendra qu'il peut sinon d'agir d'un équipement personnel à un individu, comme par exemple un téléphone mobile ou « smartphone », une tablette électronique, un ordinateur personnel, etc.

Dans la suite de la présente description on prendra l'exemple d'un terminal de contrôle d'accès d'un bâtiment (par exemple celui permettant d'ouvrir un portail - généralement il s'agit d'un terminal monté sur un mur à coté de ce portail), mais on notera que le présent procédé reste utilisable dans de très nombreuses situations, par exemple pour authentifier un individu souhaitant embarquer dans un avion, accéder à des données personnelles ou une application, mettre en œuvre une transaction, etc.

Le terminal 1 comprend des moyens de traitement de données 11, typiquement de type processeur, gérant le fonctionnement du terminal 1, et contrôlant ses divers composants, le plus souvent dans un boitier 10 protégeant ses divers composants.

De manière préférée, le terminal 1 comprend des premiers moyens d'acquisition optique 13a et/ou des deuxièmes moyens d'acquisition optique 13b, typiquement disposés de sorte à observer une scène généralement situé « devant » le terminal 1 et acquérir des données, en particulier des images d'un trait biométrique tel que le visage ou l'iris d'un individu. Par exemple, dans le cas d'un terminal mural de contrôle d'accès, les moyens d'acquisition optique 13a, 13b sont disposés à hauteur d'homme de sorte à pouvoir observer le visage des individus s'en approchant. On note qu'il peut tout à fait y avoir d'autres moyens d'acquisition optique 13a, 13b qui observeraient une autre scène (et qui ne sont pas impliqués dans le fonctionnement biométrique souhaité) : les terminaux mobiles de type smartphone ont généralement à la fois des caméras devant et des caméras derrière. On se focalisera dans la suite de la présente description sur la scène située « en regard » des moyens d'acquisition optique 13, c'est-à-dire celui situé « en face » des moyens d'acquisition optique 13, qui est donc observable et dans lequel on souhaite faire l'identification ou de l'authentification biométrique.

Les premiers moyens d'acquisition optique 13a et les deuxièmes moyens d'acquisition optique 13b sont de nature différente, puisque comme l'on verra le présent procédé utilise une image de radiation et une carte de profondeur sur chacune desquelles apparait un trait biométrique dudit individu.

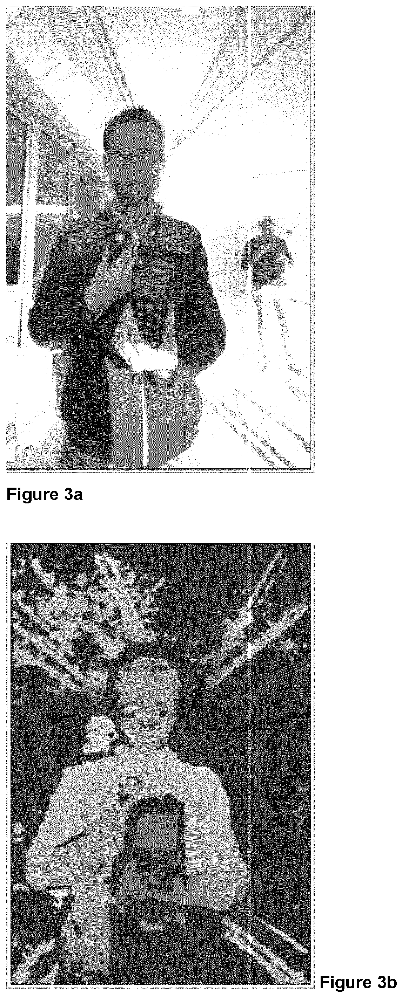

Plus précisément, les premiers moyens d'acquisition optique 13a sont des capteurs permettant l'acquisition d'une image « de radiation », c'est-à-dire une image classique dans laquelle chaque pixel reflète l'apparence réelle de la scène observée, i.e. où chaque pixel présente une valeur correspondant à la quantité de rayonnement électromagnétique reçu dans une partie du spectre électromagnétique donnée. Le plus souvent, ladite image de radiation est comme on le voit sur la Figure 3a une image visible (généralement une image couleur - type RGB - pour laquelle la valeur d'un pixel définit sa couleur, mais également une image en niveaux de gris voire en noir et blanc - pour laquelle la valeur d'un pixel définit sa luminosité), i.e. l'image telle que l'œil humain peut la voir (le spectre électromagnétique concerné est le spectre visible - bande de 380 à 780 nm), mais ce peut être alternativement une image IR (infrarouge - pour laquelle le spectre électromagnétique concerné est celui de longueur d'onde au-delà de 700 nm, en particulier de l'ordre de 700 à 2000 nm pour la bande « proche infrarouge », NIR), voire des images liées à d'autres parties du spectre.

On note que le présent procédé peut utiliser plusieurs images de radiation en parallèle, en particulier dans différentes parties de spectre électromagnétique, le cas échéant respectivement acquises via plusieurs premiers moyens d'acquisition optique 13a différents. Par exemple, on peut utiliser une image visible et une image IR.

Les deuxièmes moyens d'acquisition optique 13b sont des capteurs permettant quant à eux l'acquisition d'une « carte de profondeur », c'est-à-dire une image dont la valeur des pixels est la distance selon l'axe optique entre le centre optique du capteur et le point observé. En référence à la Figure 3b, une carte de profondeur est parfois représentée (afin d'être visuellement appréhendable), comme une image en niveaux de gris ou de couleur dont la luminance de chaque point est fonction de la valeur de distance (plus un point est près, plus il est clair) mais on comprendra qu'il s'agit d'une image artificielle par opposition aux images de radiation définies ci-avant.

On comprendra que de nombreuses technologies de capteurs permettant l'obtention d'une image de profondeur sont connues (« temps de vol », stéréovision, sonar, lumière structurée, etc.), et que dans la plupart des cas, la carte de profondeur est en pratique reconstruite par les moyens de traitement 11 à partir de données brutes fournies par les deuxièmes moyens d'acquisition optique 13b et qu'il faut traiter (on répète qu'une carte de profondeur est un objet artificiel qu'un capteur ne peut pas facilement obtenir par une mesure directe). Ainsi, par commodité, on gardera l'expression « acquisition de la carte de profondeur par les deuxièmes moyens d'acquisition optique 13b » même si l'homme du métier comprendra que cette acquisition implique généralement les moyens de traitement de données 11.

A noter que les premiers et deuxièmes moyens d'acquisition optique 13a, 13b ne sont pas nécessairement deux capteurs indépendants et peuvent être plus ou moins confondus.

Par exemple ce que l'on appelle communément une « caméra 3D » est souvent un ensemble de deux caméras 2D juxtaposées (formant un couple stéréoscopique). L'une de ces deux caméras peut constituer les premiers moyens d'acquisition optique 13a, et l'ensemble des deux les deuxièmes moyens d'acquisition optique 13b.

On connait même des réseaux de neurones à convolution (CNN) capables de générer la carte de profondeur à partir d'une image visible ou **IR,** de sorte qu'il est possible de n'avoir par exemple que des premiers moyens 13a : ceux-ci permettent d'acquérir directement l'image de radiation, et indirectement la carte de profondeur (par traitement de l'image de radiation par le CNN).

Par ailleurs, le trait biométrique à acquérir dudit individu (son visage, son iris, etc.) doit apparaître en partie au moins aussi bien sur l'image de radiation que sur la carte de profondeur, de sorte qu'elles doivent pouvoir observer plus ou moins la même scène de la même manière, i.e. l'image de radiation et la carte de profondeur doivent sensiblement coïncider. De manière préférée, les premiers et deuxièmes moyens d'acquisition optique 13a, 13b présentent sensiblement le même point de vue, c'est-à-dire qu'ils sont disposés proches, au maximum à quelques dizaines de centimètres d'écart, avantageusement quelques centimètres (dans l'exemple de deux caméras formant un couple stéréoscopique, leur distance est classiquement de l'ordre de 7 cm), avec des axes optiques parallèles ou orientés l'un par rapport à l'autre au maximum de quelques degrés, et avec des réglages optique sensiblement équivalents (même profondeur de champ, même zoom, etc.). C'est le cas dans l'exemple des figures 3a et 3b, où l'on voit que les points de vue et les orientations coïncident.

Néanmoins, il reste possible d'avoir des capteurs plus espacés, dans la mesure où l'on connait des algorithmes de recalage (connaissant leurs positions et orientations relatives). En tout état de cause, les éventuelles parties de la scène qui ne seraient pas visibles à la fois sur l'image de radiation et la carte de profondeur sont ignorées.

A noter que les premiers et/ou les deuxièmes moyens d'acquisition optique 13a, 13b sont préférentiellement fixes, et avec des réglages optiques constant (pas de zoom variable pas exemple), de sorte que qu'on est certain qu'ils continuent d'observer la même scène de la même manière.

Bien entendu, les premiers et deuxièmes moyens d'acquisition optique 13a, 13b sont synchronisés de sorte à acquérir des données de manière sensiblement simultanée. L'image de radiation et la carte de profondeur doivent représenter l'individu sensiblement au même moment (i.e. à quelques millisecondes ou dizaines de millisecondes près), même s'il reste tout à fait possible de faire fonctionner ces moyens 13a, 13b de manière tout à fait indépendante (voir plus loin).

Par ailleurs, le terminal 1 peut avantageusement comprendre des moyens d'éclairage 14 adaptés pour éclairer ladite scène en regard desdits moyens d'acquisition optique 13a, 13b (c'est-à-dire qu'ils vont pouvoir éclairer les sujets observables par les moyens d'acquisition optique 13a, 13b, ils sont généralement disposés à proximité de ces derniers pour « regarder » dans la même direction). On comprend ainsi que la lumière émise par les moyens d'éclairage 14 est reçue et réémise par le sujet vers le terminal 1, ce qui permet que les moyens d'acquisition optique 13a, 13b puissent acquérir des données de qualité correcte et augmenter la fiabilité de l'éventuel traitement biométrique subséquent. En effet, un visage dans la pénombre sera par exemple plus difficile à reconnaître. Également, on constate que des techniques de « spoofing » (en français « usurpation » ou « mystification ») dans lesquels un individu essaye de tromper frauduleusement un terminal de contrôle d'accès au moyen d'accessoires tel qu'un masque ou une prothèse sont plus facilement repérables sous éclairage adéquat.

Enfin, les moyens de traitement de données 11 sont souvent connectés à des moyens de stockage de données 12 stockant une base de données biométriques de référence, préférentiellement des images de visages (faces) ou d'iris, de sorte à permettre la comparaison d'un trait biométrique de l'individu apparaissant sur l'image de radiation avec les données biométriques de référence. Les moyens 12 peuvent être ceux d'un serveur distant auquel le terminal 1 est connecté, mais avantageusement il s'agit de moyens 12 locaux, i.e. inclus dans le terminal 1 (en d'autres termes le terminal 1 comprends les moyens de stockage 12), de sorte à éviter tout transfert de données biométriques sur le réseau et limiter des risques d'interception ou de fraude.

### Procédé

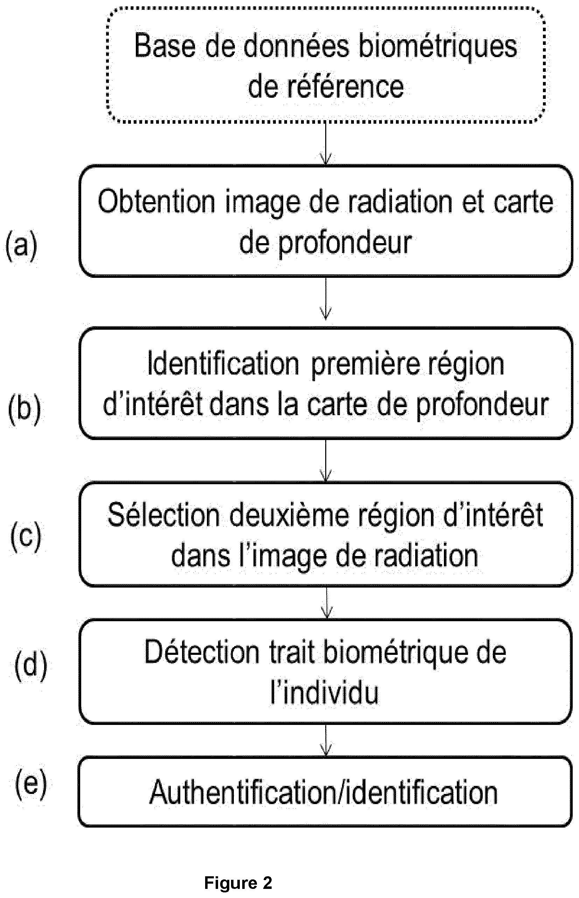

En référence à la Figure 2, le présent procédé, mis en œuvre par les moyens de traitement de données 11 du terminal 1, commence par une étape (a) d'obtention d'au moins une image de radiation et d'une carte de profondeur sur chacune desquelles apparait un trait biométrique dudit individu. Comme expliqué, si le terminal 1 comprend directement les premiers moyens d'acquisition optique 13a et/ou les deuxièmes moyens d'acquisition optique 13b, cette étape peut comprendre l'acquisition de données de la part de ces moyens 13a, 13b et l'obtention respective de l'image de radiation à partir des données acquises par les premiers moyens d'acquisition optique et/ou de la carte de profondeur par les deuxièmes moyens d'acquisition optique 13b.

Le procédé n'est cependant par limité à ce mode de réalisation, et l'image de radiation et la carte de profondeur pourront être obtenues de manière externe et simplement transmises aux moyens de traitement de données 11 pour analyse.

Dans une étape (b), est identifiée dans ladite carte de profondeur une première région d'intérêt susceptible de contenir ledit trait biométrique. Par région d'intérêt on entend une (ou plusieurs, la région d'intérêt n'est pas forcément un ensemble continu) zone spatiale sémantiquement plus intéressante et sur laquelle on estime qu'on va trouver le trait biométrique recherché (et pas à l'extérieure cette région d'intérêt).

Ainsi, alors qu'il était connu de tenter d'identifier une région d'intérêt directement dans l'image de radiation, il est bien plus facile de le faire dans la carte de profondeur :
- celle-ci n'est que peu affectée par l'exposition (la carte de profondeur ne comprend aucune information dépendant de la luminosité) ;
- est très discriminante car elle permet de séparer sans difficulté les objets distinct et notamment ceux du premier plan par rapport à ceux du second plan.

Pour cela, ladite première région d'intérêt est avantageusement identifiée à l'étape (b) comme l'ensemble des pixels de ladite carte de profondeur associés à une valeur de profondeur comprise dans une gamme prédéterminée, avantageusement les pixels les plus proches. **Il** s'agit d'un simple seuillage de la carte de profondeur, permettant de filtrer les objets à la distance souhaitée du terminal 1, éventuellement couplé à un algorithme permettant d'agréger des pixels en objets ou blobs (pour éviter d'avoir plusieurs régions d'intérêt distinctes correspondant par exemple à plusieurs visages à la même distance ou non). Ainsi, un visage de grande dimension sur un poster sera écarté car trop loin, même si la taille du visage sur le poster avait été choisi de manière adéquate.

De manière préférée, on prendra par exemple la gamme [0 ; 2m] voire [0 ; 1m] dans le cas d'un terminal 1 mural, mais selon les cas d'application on pourra faire varier cette gamme (par exemple dans le cas d'un terminal personnel de type smartphone, on pourra se limiter à 50 cm).

Alternativement ou en complément, on peut mettre en œuvre un algorithme de détection/classification (par exemple via un réseau de neurones à convolution, CNN) sur la carte de profondeur pour identifier ladite première région d'intérêt susceptible de contenir ledit trait biométrique, par exemple la silhouette humaine la plus proche.

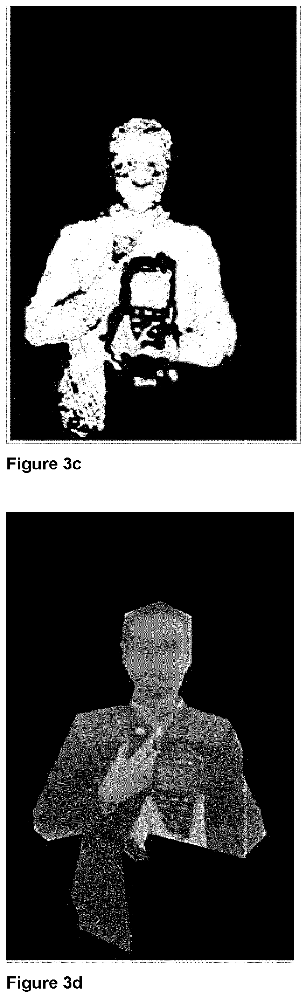

A l'issue de l'étape (b), on peut obtenir un masque définissant la première zone d'intérêt. A ce titre, l'exemple de la Figure 3c correspond au masque représentant la première région d'intérêt obtenue à partir de la carte de la figure 3b en sélectionnant les pixels associés à une distance de moins d'1 m : les pixels blancs sont ceux identifiés comme faisant partie de la région d'intérêt et les pixels noirs sont ceux écartés (n'en faisant pas partie), d'où le qualificatif de masque. A noter qu'on pourra utiliser d'autre représentations de la première région d'intérêt, comme par exemple la liste des pixels sélectionnés, ou les coordonnées d'un squelette de la région d'intérêt.

Ensuite, dans une étape (c), on sélectionne cette fois dans l'image de radiation une deuxième région d'intérêt correspondant à ladite première région d'intérêt identifiée dans la carte de profondeur. Si on a plusieurs images de radiation (par exemple une image visible et une image IR), cette sélection (et les étapes suivantes) peut être mise en œuvre sur chaque image de radiation. On comprendra bien que cette sélection se fait dans l'image de radiation précédemment acquise, sur la base des pixels de l'image. Il ne s'agit pas, par exemple, d'acquérir une nouvelle image de radiation qui serait focalisée sur la première région, ce qui serait complexe et impliquerait des premiers moyens 13a mobiles.

En d'autres termes, on « projette » dans l'image de radiation la première région d'intérêt obtenue sur la carte de profondeur. Si l'image de radiation et la carte de profondeur présentent sensiblement le même point de vue et la même direction, on peut simplement appliquer le masque obtenu sur l'image de radiation, i.e. on filtre l'image de radiation : les pixels de l'image de radiation appartenant à la première région d'intérêt sont conservés, on détruit l'information dans les autres (valeur mise à zéro - pixel noir).

Alternativement, on transpose les coordonnées des pixels de la première région d'intérêt sur l'image de radiation en tenant compte des positions et orientations des caméras, de manière connue pour l'homme du métier. Par exemple, cela peut se faire par apprentissage des caractéristiques des systèmes de caméras de manière automatique (paramètres intrinsèques à la caméra comme la focale et la distorsion, et paramètres extrinsèques comme la position et l'orientation). Cet apprentissage réalisé une fois pour toutes permet alors de réaliser la « projection » par calculs lors du traitement des images.

La Figure 3d représente ainsi la deuxième région d'intérêt obtenue en appliquant le masque de la figure 3c sur l'image de radiation de la figure 3a. On voit bien que tout le fond inutile est supprimé et qu'il ne reste que l'individu au premier plan.

En complément, l'étape (c) peut avantageusement comprendre en outre la suppression dans ladite image de radiation des objets immobiles. Plus précisément, on limite la deuxième région d'intérêt aux objets en mouvement. Ainsi, un pixel de l'image de radiation est sélectionné comme faisant partie de la deuxième région d'intérêt s'il correspond à un pixel de la première région d'intérêt ET s'il fait partie d'un objet en mouvement. L'idée est qu'il peut y avoir des objets proches qui restent du décor inutile, par exemple des plantes ou des armoires.

Pour cela, de nombreuses techniques sont connues de l'homme du métier, et on pourra par exemple obtenir deux images de radiation successives et les soustraire, ou bien utiliser des algorithmes de tracking pour estimer des vitesses des objets ou des pixels.

De manière préférée, cette suppression peut être effectuée directement dans la carte de profondeur à l'étape (b). En effet, la détection de mouvement est facile dans la carte de profondeur puisque tout mouvement d'un objet dans le champ se traduit immédiatement par une variation de distance avec la caméra, et donc une variation de valeur locale dans la carte de profondeur. Et, en limitant directement la première région d'intérêt aux objets en mouvement à l'étape (b), la deuxième région d'intérêt le sera automatiquement à l'étape (c) dans la mesure où la deuxième région d'intérêt correspond à la première région d'intérêt.

On comprend que l'étape (c) est une étape « d'extraction » de l'information utile de l'image de radiation. Ainsi, à l'issue de l'étape (c) on dispose alors d'une image de radiation « simplifiée » réduite à la deuxième région d'intérêt sélectionnée.

Dans une étape (d), ledit trait biométrique de l'individu est détecté dans ladite deuxième région d'intérêt sélectionnée de ladite image de radiation. On pourra choisir toute technique de détection connue de l'homme du métier, et notamment utiliser un réseau de neurones à convolution, CNN, de détection/classification. A noter que par facilité on peut mettre en œuvre ladite détection sur toute l'image de radiation, et éliminer tout ce qui détecté hors de la deuxième région d'intérêt.

De manière classique, l'étape (d) comprend préférentiellement l'adaptation préalable de l'exposition de l'image de radiation (ou juste de l'image de radiation simplifiée) par rapport à la deuxième région d'intérêt sélectionnée. Pour cela, comme expliqué on normalise l'exposition de toute l'image par rapport à celle de la zone considérée : ainsi, on est sûr que les pixels de la deuxième région d'intérêt sont exposés de manière optimale, le cas échéant au détriment du reste de l'image de radiation, mais cela est sans importance puisqu'on a renoncé à l'information dans ce reste de l'image de radiation.

Ainsi :
- on réduit le temps et la complexité de l'algorithme de détection puisque seulement une fraction de l'image de radiation a besoin d'être analysée ;
- on élémine les risques de fausses détections sur la partie non sélectionnée (fréquentes si l'on utilise un CNN de détection) ;
- on est sûr que les conditions de détection sont optimales dans la deuxième région d'intérêt et donc que les performances de détection y sont optimales.

A noter que l'étape (d) peut en outre comprendre une nouvelle adaptation de l'exposition de l'image de radiation sur une zone encore plus précise après la détection, i.e. par rapport au trait biométrique détecté (généralement sa « boite » de détection l'englobant) dans la deuxième région d'intérêt, de sorte à optimiser encore plus finement l'exposition.

Enfin, dans une étape (e), est mise en œuvre l'authentification ou l'identification à proprement parler dudit individu sur la base du trait biométrique détecté.

Plus précisément, on considère ledit trait biométrique détecté comme une donnée biométrique candidate, et il est comparé avec une ou plusieurs données biométriques de référence de la base de données des moyens de stockage de données 12.

Il suffit alors de vérifier que cette donnée biométrique candidate coïncide avec la/une donnée biométrique de référence. De façon connue, la donnée biométrique candidate et la donnée biométrique de référence coïncident si leur distance selon une fonction de comparaison donnée est inférieure à un seuil prédéterminé.

Ainsi, la mise en œuvre de la comparaison comprend typiquement le calcul d'une distance entre les données, dont la définition varie en fonction de la nature des données biométriques considérées. Le calcul de la distance comprend le calcul d'un polynôme entre les composantes des données biométriques, et avantageusement le calcul d'un produit scalaire.

Par exemple, dans le cas où les données biométriques ont été obtenues à partir d'images d'iris, une distance classiquement utilisée pour comparer deux données est la distance de Hamming. Dans le cas où les données biométriques ont été obtenues à partir d'images du visage d'individus, il est courant d'utiliser la distance euclidienne.

Ce type de comparaison est connu de l'Homme du Métier et ne sera pas décrit plus en détails ci-avant.

L'individu est authentifié/identifié si la comparaison révèle un taux de similarité entre la donnée candidate et la/une donnée de référence excédant un certain seuil, dont la définition dépend de la distance calculée.

A noter que s'il y a plusieurs images de radiation, il peut y avoir des détections de trait biométrique sur chaque image de radiation (limitée à une deuxième région d'intérêt), et ainsi l'étape (e) peut impliquer chaque trait biométrique détecté, pour.

### Terminal

Selon un deuxième aspect, la présente invention concerne le terminal 1 pour la mise en œuvre du procédé selon le premier aspect.

Le terminal 1 comprend des moyens de traitement de données 11, de type processeur, avantageusement des premiers moyens d'acquisition optique 13a (pour l'acquisition d'une image de radiation) et/ou des deuxièmes moyens d'acquisition optique 13b (pour l'acquisition d'une carte de profondeur), et le cas échéant des moyens de stockage de données 12 stockant une base de données biométriques de référence.

Les moyens de traitement de données 11 sont configurés pour implémenter :
- l'obtention d'une image de radiation et d'une carte de profondeur sur chacune desquelles apparait un trait biométrique dudit individu ;
- l'identification dans ladite carte de profondeur d'une première région d'intérêt susceptible de contenir ledit trait biométrique ;
- la sélection dans ladite image de radiation d'une deuxième région d'intérêt correspondant à ladite première région d'intérêt identifiée dans la carte de profondeur ;
- la détection dudit trait biométrique de l'individu dans ladite deuxième région d'intérêt sélectionnée de ladite image de radiation ;
- l'authentification ou l'identification dudit individu sur la base du trait biométrique détecté

Selon un troisième et un quatrième aspects, l'invention concerne un produit programme d'ordinateur comprenant des instructions de code pour l'exécution (en particulier sur les moyens de traitement de données 11 du terminal 1) d'un procédé selon le premier aspect de l'invention d'authentification ou d'identification d'un individu, ainsi que des moyens de stockage lisibles par un équipement informatique (une mémoire 12 du terminal 2) sur lequel on trouve ce produit programme d'ordinateur.

## Revendications

1. Procédé d'authentification ou d'identification d'un individu, **caractérisé en ce qu'**il comprend la mise en œuvre par des moyens de traitement de données (11) d'un terminal (1) des étapes suivantes :
(a) Obtention d'une image de radiation et d'une carte de profondeur sur chacune desquelles apparait un trait biométrique dudit individu, chaque pixel de ladite image de radiation présente une valeur correspondant à la quantité de rayonnement électromagnétique reçu dans une partie du spectre électromagnétique donnée ;
(b) Identification dans ladite carte de profondeur d'une première région d'intérêt susceptible de contenir ledit trait biométrique comme l'ensemble des pixels de ladite carte de profondeur associés à une valeur de profondeur comprise dans une gamme prédéterminée ;
(c) Sélection dans ladite image de radiation d'une deuxième région d'intérêt correspondant à ladite première région d'intérêt identifiée dans la carte de profondeur ;
(d) Détection dudit trait biométrique de l'individu dans ladite deuxième région d'intérêt sélectionnée de ladite image de radiation ;
(e) Authentification ou identification dudit individu sur la base du trait biométrique détecté

2. Procédé selon la revendication 1, dans lequel l'étape (a) comprend l'acquisition de ladite image de radiation à partir de données acquises par des premiers moyens d'acquisition optique (13a) du terminal (1) et/ou l'acquisition de ladite carte de profondeur à partir de données acquises par des deuxièmes moyens d'acquisition optique (13b) du terminal (1).

3. Procédé selon l'une des revendications 1 à 2, dans lequel ladite l'étape (c) comprend en outre la suppression dans ladite image de radiation des objets immobiles.

4. Procédé selon l'une des revendications 1 à 3, dans lequel ladite l'étape (d) comprend en outre l'adaptation de l'exposition de l'image de radiation par rapport à la deuxième région d'intérêt sélectionnée.

5. Procédé selon l'une des revendications 1 à 4, dans lequel l'image de radiation et la carte de profondeur présentent sensiblement le même point de vue.

6. Procédé selon l'une des revendications 1 à 5, dans lequel ledit trait biométrique de l'individu est choisi parmi un visage et un iris de l'individu.

7. Procédé selon l'une des revendications 1 à 6, dans lequel l'étape (e) comprend la comparaison du trait biométrique détecté avec des données biométriques de référence stockées sur des moyens de stockage de données (12).

8. Procédé selon l'une des revendications 1 à 7, dans lequel l'étape (e) comprend la mise en œuvre d'un contrôle d'accès en fonction du résultat de ladite identification ou authentification biométrique.

9. Procédé selon l'une des revendications 1 à 8, dans lequel l'image de radiation est une image visible ou une image infrarouge.

10. Terminal (1) comprenant des moyens de traitement de données (11) configurés pour implémenter :
- l'obtention d'une image de radiation et d'une carte de profondeur sur chacune desquelles apparait un trait biométrique d'un individu, chaque pixel de ladite image de radiation présente une valeur correspondant à la quantité de rayonnement électromagnétique reçu dans une partie du spectre électromagnétique donnée ;
- l'identification dans ladite carte de profondeur d'une première région d'intérêt susceptible de contenir ledit trait biométrique comme l'ensemble des pixels de ladite carte de profondeur associés à une valeur de profondeur comprise dans une gamme prédéterminée ;
- la sélection dans ladite image de radiation d'une deuxième région d'intérêt correspondant à ladite première région d'intérêt identifiée dans la carte de profondeur ;
- la détection dudit trait biométrique de l'individu dans ladite deuxième région d'intérêt sélectionnée de ladite image de radiation ;
- l'authentification ou l'identification dudit individu sur la base du trait biométrique détecté.

11. Terminal selon la revendication 10, comprenant des premiers moyens d'acquisition optique (13a) pour l'acquisition de ladite image de radiation et/ou des deuxièmes moyens d'acquisition optique (13b) pour l'acquisition de ladite carte de profondeur.

12. Produit programme d'ordinateur comprenant des instructions de code pour l'exécution d'un procédé selon l'une des revendications 1 à 9 d'authentification ou d'identification d'un individu, lorsque ledit programme est exécuté sur un ordinateur.

13. Moyen de stockage lisible par un équipement informatique sur lequel un produit programme d'ordinateur comprend des instructions de code pour l'exécution d'un procédé selon l'une des revendications 1 à 9 d'authentification ou d'identification d'un individu.

## Patentansprüche

1. Verfahren zur Authentifizierung oder Identifizierung einer Person, **dadurch gekennzeichnet, dass** es die Durchführung der folgenden Schritte durch Datenverarbeitungsmittel (11) eines Terminals (1) umfasst:
(a) Erhalten eines Strahlungsbildes und einer Tiefenkarte, auf denen jeweils ein biometrisches Merkmal der Person erscheint, wobei jedes Pixel des Strahlungsbildes einen Wert aufweist, der der Menge der in einem bestimmten Teil des elektromagnetischen Spektrums empfangenen elektromagnetischen Strahlung entspricht;
(b) Identifizierung eines ersten interessierenden Bereichs in der Tiefenkarte, der das biometrische Merkmal enthalten könnte, als die Gesamtheit der Pixel der Tiefenkarte, die einem Tiefenwert innerhalb eines vorgegebenen Bereichs zugeordnet sind;
(c) Auswählen eines zweiten interessierenden Bereichs in dem Strahlungsbild, der dem ersten interessierenden Bereich entspricht, der in der Tiefenkarte identifiziert wurde;
(d) Erfassen des biometrischen Merkmals der Person in dem ausgewählten zweiten interessierenden Bereich des Strahlungsbildes;
(e) Authentifizierung oder Identifizierung der Person auf der Grundlage des erkannten biometrischen Merkmals.

2. Verfahren nach Anspruch 1, wobei Schritt (a) das Erfassen des Strahlungsbildes aus Daten umfasst, die von einer ersten optischen Erfassungseinrichtung (13a) des Endgeräts (1) erfasst wurden, und/oder das Erfassen der Tiefenkarte aus Daten, die von einer zweiten optischen Erfassungseinrichtung (13b) des Endgeräts (1) erfasst wurden.

3. Verfahren nach einem der Ansprüche 1 bis 2, wobei der Schritt (c) ferner das Entfernen unbeweglicher Objekte aus dem Strahlungsbild umfasst.

4. Verfahren nach einem der Ansprüche 1 bis 3, wobei der Schritt (d) ferner das Anpassen der Belichtung des Strahlungsbildes in Bezug auf den ausgewählten zweiten interessierenden Bereich umfasst.

5. Verfahren nach einem der Ansprüche 1 bis 4, wobei das Strahlungsbild und die Tiefenkarte im Wesentlichen denselben Blickwinkel aufweisen.

6. Verfahren nach einem der Ansprüche 1 bis 5, wobei das biometrische Merkmal der Person aus einem Gesicht und einer Iris der Person ausgewählt wird.

7. Verfahren nach einem der Ansprüche 1 bis 6, wobei der Schritt (e) den Vergleich des erfassten biometrischen Merkmals mit Referenz-Biometriedaten umfasst, die auf einem Datenspeichermedium (12) gespeichert sind.

8. Verfahren nach einem der Ansprüche 1 bis 7, wobei der Schritt (e) die Durchführung einer Zugangskontrolle in Abhängigkeit vom Ergebnis der biometrischen Identifizierung oder Authentifizierung umfasst.

9. Verfahren nach einem der Ansprüche 1 bis 8, wobei das Strahlungsbild ein sichtbares Bild oder ein Infrarotbild ist.

10. Terminal (1) mit Datenverarbeitungsmitteln (11), die konfiguriert sind, um Folgendes zu implementieren:
▪ Erhalten eines Strahlungsbildes und einer Tiefenkarte, auf denen jeweils ein biometrisches Merkmal einer Person erscheint, wobei jedes Pixel des Strahlungsbildes einen Wert aufweist, der der Menge, der in einem bestimmten Teil des elektromagnetischen Spektrums empfangenen elektromagnetischen Strahlung entspricht;
▪ Identifizieren eines ersten interessierenden Bereichs in der Tiefenkarte, der das biometrische Merkmal enthalten könnte, als die Gesamtheit der Pixel der Tiefenkarte, die mit einem Tiefenwert innerhalb eines vorgegebenen Bereichs verbunden sind;
▪ Auswählen eines zweiten interessierenden Bereichs in dem Strahlungsbild, der dem ersten interessierenden Bereich entspricht, der in der Tiefenkarte identifiziert wurde;
▪ Erfassen des biometrischen Merkmals der Person in dem ausgewählten zweiten interessierenden Bereich des Strahlungsbildes;
▪ Authentifizierung oder Identifizierung der Person auf der Grundlage des erkannten biometrischen Merkmals.

11. Terminal gemäß Anspruch 10, umfassend erste optische Erfassungsmittel (13a) zum Erfassen des Strahlungsbildes und/oder zweite optische Erfassungsmittel (13b) zum Erfassen der Tiefenkarte.

12. Computerprogrammprodukt, das Codebefehle zur Durchführung eines Verfahrens gemäß einem der Ansprüche 1 bis 9 zur Authentifizierung oder Identifizierung einer Person umfasst, wenn das Programm auf einem Computer ausgeführt wird.

13. Computer-lesbares Speichermedium, auf dem ein Computerprogramm Codeanweisungen zur Durchführung eines Verfahrens gemäß einem der Ansprüche 1 bis 9 zur Authentifizierung oder Identifizierung einer Person enthält.

## Claims

1. Method for authenticating or identifying an individual, **characterised in that** it comprises the implementation by data processing means (11) of a terminal (1) of the following steps:
(a) Obtaining a radiation image and a depth map, each of which shows a biometric feature of said individual, each pixel of said radiation image having a value corresponding to the amount of electromagnetic radiation received in a given part of the electromagnetic spectrum;
(b) Identification in said depth map of a first region of interest likely to contain said biometric feature, such as all pixels in said depth map associated with a depth value within a predetermined range;
(c) Selecting in said radiation image a second region of interest corresponding to said first region of interest identified in the depth map;
(d) Detecting said biometric feature of the individual in said second region of interest selected from said radiation image;
(e) Authenticating or identifying said individual on the basis of the detected biometric feature

2. Method according to claim 1, wherein step (a) comprises acquiring said radiation image from data acquired by first optical acquisition means (13a) of the terminal (1) and/or acquiring said depth map from data acquired by second optical acquisition means (13b) of the terminal (1).

3. Method according to one of claims 1 to 2, wherein said step (c) further comprises removing immobile objects from said radiation image.

4. Method according to one of claims 1 to 3, wherein said step (d) further comprises adapting the exposure of the radiation image with respect to the second selected region of interest.

5. Method according to one of claims 1 to 4, wherein the radiation image and the depth map have substantially the same viewpoint.

6. Method according to one of claims 1 to 5, wherein said biometric feature of the individual is selected from a face and an iris of the individual.

7. Method according to one of claims 1 to 6, wherein step (e) comprises comparing the detected biometric feature with reference biometric data stored on data storage means (12).

8. Method according to one of claims 1 to 7, wherein step (e) comprises implementing access control based on the result of said biometric identification or authentication.

9. Method according to one of claims 1 to 8, wherein the radiation image is a visible image or an infrared image.

10. Terminal (1) comprising data processing means (11) configured to implement:
▪ obtaining a radiation image and a depth map, each of which shows a biometric feature of an individual, each pixel of said radiation image having a value corresponding to the amount of electromagnetic radiation received in a given part of the electromagnetic spectrum;
▪ identifying in said depth map a first region of interest likely to contain said biometric feature, such as all pixels of said depth map associated with a depth value within a predetermined range;
▪ selecting in said radiation image a second region of interest corresponding to said first region of interest identified in the depth map;
▪ detecting said biometric feature of the individual in said second region of interest selected from said radiation image;
▪ authenticating or identifying said individual on the basis of the detected biometric feature.

11. Terminal according to claim 10, comprising first optical acquisition means (13a) for acquiring said radiation image and/or second optical acquisition means (13b) for acquiring said depth map.

12. A computer program product comprising code instructions for executing a method according to any one of claims 1 to 9 for authenticating or identifying an individual, when said program is executed on a computer.

13. A computer-readable storage medium on which a computer program product comprises code instructions for executing a method according to any one of claims 1 to 9 for authenticating or identifying an individual.
